# EUROPEAN PATENT SPECIFICATION

(11) **EP 1 281 643 B1**
(45) Date of publication and mention of the grant of the patent: **01.09.2004**
(21) Application number: 01919454.7
(22) Date of filing: 30.03.2001
(51) Int. Cl.: B65G 47/14, B65G 47/252

(54) **AUTOMATIC LINEAR MACHINE FOR ORIENTING AND ALIGNING ARTICLES**
AUTOMATISCHE LINEARFÖRDERUNG ZUM ORIENTIEREN UND AUSRICHTEN VON GEGENSTÄNDEN
MACHINE LINEAIRE AUTOMATIQUE PERMETTANT D'ORIENTER ET D'ALIGNER DES ARTICLES

(30) Priority: 31.03.2000 WO PCT/ES00/00119
(43) Date of publication of application: 05.02.2003
(73) Proprietor: Marti Sala, Jaime, 07017 Barcelona (ES)
(72) Inventor: Marti Sala, Jaime, 07017 Barcelona (ES)
(74) Representative: Gislon, Gabriele
(86) International application number: PCT/ES2001/000129
(87) International publication number: WO 2001/072616

(56) References cited:
- ES-A- 8 102 480
- ES-A2- 2 066 672
- ES-A6- 2 005 957
- ES-B1- 2 113 254
- ES-T3- 2 071 072
- GB-A- 1 233 357
- GB-A- 1 244 294
- US-A- 2 855 740
- US-A- 4 220 238

## Description

### Field of technique

This invention concerns an automatic linear machine for article positioning and aligning, where these articles are of the type with a differentiated geometric configuration at one end, such as bottles with neck, said machine comprising means to transfer such articles from a tank where they are in a scrambled state to an exit conveyor whereon the articles are deposited in an aligned vertical position.

The machine of this invention is useful in the food, household goods, chemical and similar sectors, especially in bottling, packing, filling, labelling and similar plants.

### Background to the invention

The use of: article positioning machines is common in the packing technique sector, especially positioning machines which put empty containers in the vertical position, with the filling neck or opening at the top.

Patent US-A-3295659 describes an operating principle based on allowing the article to fall under the force of gravity into a drop channel from a lying, pre-orientated, longitudinal position, said drop channel including end-stop and supports which hold the differentiated geometric configuration no matter what the article's relative position is with respect to the longitudinal axis of the article. This principle has become the most frequently employed by many kind of positioning machines for articles having a differentiated geometric configuration at one end, especially empty light containers with a neck.

Said operating principle associated with a rotating configuration has undergone extensive evolution which has lead to the current positioning machines, such as the one described in patent US-A-4681209 to the present applicant, in which a series of cavities are tangentially arranged at the periphery of a rotating plane which receives the articles in a scrambled fashion.

This type of rotating machine, with various variants, has become firmly established on the market due to its efficiency and high level of productivity. However, the machine is large and both its price and its operating and maintenance costs are proportionally high.

Therefore, for those cases requiring medium or low production rates, or where available space is reduced, there is a potential market demand for an automatic linear machine for positioning and aligning articles such as light empty bottles or containers, and suitable for medium or low production rates, with reduced space requirements and moderate acquisition and operating costs. A linear positioning machine could fulfil these requirements.

Obeying a different operating principle, patent US-A-4463846, on which the preamble of claim 1 is based, describes an article positioning machine that is fed by a linear conveyor where the articles advance in a longitudinally pre-orientated lying arrangement, with a differentiated geometric configuration at one end either to the front or rear with respect to the conveyor direction of movement. These articles are typically light, empty bottles, where the differentiated configuration is a neck. The machine has a positioning station to vertically position and align the articles on an exit conveyor means, where the positioning station is based on a rotating structure with respect to the horizontal axis, and which is tangentially fed at the top by the mentioned linear conveyor. Both the conveyor and the rotating structure work together with a predetermined body conformation of the article in order to hold it by two side points, close to an end opposite the neck, so that a horizontal axis is defined between these two points around which the article may rotate. It should be pointed out that this predetermined article body conformation has no other purpose than to co-operate with the positioning machine meaning that the articles must be provided with said body conformation for use with this machine. The articles move on the support surface along the length of the linear conveyor. However, on arrival at the rotating structure, the articles are pushed by a friction wheel that rotates in the opposite direction to the structure at a slightly higher speed, so that, depending on the relative position of the neck with respect to the direction of movement, the article is either directly taken upright to a collection point, or is rotated until it makes contact with an end-stop and falls upright into the same collection point, from which exit conveyor means leave.

However, in addition to being complex, this machine has the serious inconvenience of only being operational with said predetermined article body conformation, without which the system's operating principle is not valid, which constitutes a serious limitation with regards to the variety of articles or containers that may be handled. Additionally, the holding and turning of the articles by these two side points may leave unwanted marks on the outer surfaces of the container. Moreover, this patent does not explain how the articles pass from a scrambled state, in which they originally are in a suitable tank, to the referred lying, longitudinally aligned arrangement on the feed conveyor.

Patent US-A-2855740 describes a machine for loading articles into boxes, which comprises an entry linear conveyor bringing the bulk scrambled articles. At the end of the entry conveyor is a rotating wheel with many transversal cavities around its periphery, in the fashion of a Ferris wheel, into which a predetermined number of articles are inserted, which are turned and deposited on the lower part of this wheel in boxes which advance in synchronism along a linear exit conveyor.

This machine however, does not carry out the positioning in accordance with a pre-selected orientation, which means that is only useful for articles that do not require positioning in any specific position, such as fruit and vegetables, especially those that have an approximately round shape, such as tomatoes, but not for positioning containers in an upright and aligned way.

Another raising requirement, especially in the food product packaging industry, is the need to perform a rapid cleaning operation of each container when it is upside down, whether by the introduction of some cleaning fluid into the interior through the neck or by suction of the interior, or even a combination of both operations consecutively.

### Brief description of the invention

One object of this invention is to provide an automatic machine for positioning and aligning of articles, which has relatively small dimensions, together with reduced purchases and running costs and suitable for medium or small production runs.

Another object of this invention is to provide an automatic machine for positioning and aligning of articles, especially light, empty containers and suitable for medium or small production runs and fitted with a cleaning device and/or vacuum cleaner for the interior of the articles when these are upside down.

These objects are achieved according to the invention by providing an automatic machine according to claim 1.

Said machine may further include a feeder for supplying the articles from the tank, where they are stored in a scrambled fashion, to the linear conveyor, where they are placed in the pre-orientated position, and the linear conveyor has an associated selector device to reject or turn those containers which are not in the correct orientation on the conveyor.

The feeder includes at least first and second inclined planes for receiving scrambled articles coming from the tank. These first and second inclined planes converge on a drop space delimited by two vertical parallel planes separated by an adjustable distance, slightly larger than the smallest transverse dimension of the articles, the drop space of which is aligned over a portion of the linear conveyor, which is typically an endless conveyor belt. According to a first embodiment, these inclined planes cooperate with other walls to form a hopper. According to a second embodiment, the first inclined plane comprises a rotating inclined disk, which receives the articles coming from the tank at its highest level and leads them to the mouth area of the drop space which is adjacent to its lowest level. The tank may be located above this hopper or rotating disk and allow the articles to fall into it by the force of gravity. However, in a preferred exemplary embodiment, the tank is on a lower level with respect to the first and second inclined planes and includes elevation means, such as a continuous belt elevator with blades to transfer the articles from the tank to the feeder. Advantageously, the tank is also at a lower level with respect to the conveyor and adjacent on to at least one section thereof at the feeder exit, where deflector means are located to return those articles that are in an unwanted position, such as superimposed or one on top of another article, among others.

In this way, the articles are lifted from the tank by the mentioned elevator and allowed to fall in a scrambled fashion onto the feeder's inclined planes, across which they slide and concentrate at the mouth of the adjustable width drop space and gradually enter it, where they are subjected to a first movement restriction. When the articles reach the bottom of the drop space, they make contact with the conveyor's moving surface and are turned until they are pulled along due to conveyor belt friction, and reveal a natural tendency to adopt a lying position on their longest dimension with the differentiated geometric configuration already located at the front or rear with respect to the conveyor direction of travel. It must be taken into account that when these articles also present two differentiated transverse dimensions, and in virtue of the gap between the vertical parallel planes, slightly longer than the smaller one of these transverse dimensions, the articles become longitudinally aligned with the conveyor supported on one of their narrower sides. Those articles which, because of accumulation, do not adopt this arrangement will be rejected and returned to the tank by said deflector means.

In the fist embodiment including a hopper, it is probable that the accumulation of articles at the mouth of the drop space will lead to a blockage, for example, due to a mutual joining of protuberant parts on the articles. In order to provide a solution to this problem, one or more of the feeder planes are connected to a shaker, such as a fluid dynamic cylinder, controlled by detection means, preferably an optical sensor, which is located so as to cover the mouth zone. Upon detection of an excessive accumulation of articles in said zone by said detection means, a command is issued for the shaker to provide a brief shaking or vibration to these planes which is sufficient to break up the blockage.

In the second embodiment fitted with the rotating disk, a great accumulation of scrambled articles occurs, which are removed by the rotating disk itself, which guarantees that a high proportion of them enter the drop space, where those that are incorrectly positioned on the conveyor are returned back to the tank by deflector means.

The articles thus pre-orientated are led by the linear conveyor to the positioning station. Since said positioning station places the articles upright in a single direction, a prior predetermined orientation of the articles on the conveyor belt is required. For this reason, a selector device associated with the entry linear conveyor is included, which comprises detection means, preferably of electronic reading, such as optical sensors or video cameras, to detect the differentiated geometric configuration of the articles with respect to their direction of travel. When an article with the differentiated geometric configuration in an undesired position is detected, the detection means sends a command to an ejector device, such as a pusher driven by a fluid dynamic cylinder, which ejects the detected article from the conveyor returning it to the adjacent initial tank, or it sends an command to a turning device which rotates the article through 180° on the conveyor leaving it with the differentiated geometric configuration in the required position. Both devices are equally effective, however, the first is simpler and more economic, whereas the second is more productive and the choice of one or the other system is based according to required productivity and available economic means.

With the inclusion of the above-described selectors, all the articles reach the positioning station with the differentiated geometric configuration in the predetermined position, so that operation of this positioning station is limited to placing them upright from this position. A simple exemplary embodiment comprises at the end of the linear conveyor at least one open space over at least one drop channel having an open bottom, through which the articles fall and are located in a vertical position on said exit conveyor means. Such a drop channel is a simplified version of the drop channels in the prior art rotating machines including drop channels with neck retention means.

A more significant exemplary embodiment for the positioning station comprises a rotating element having suitable cavities for receiving an article with the differentiated geometric configuration in a required position, where the rotating element is located at the end of the entry linear conveyor and rotates at a speed suitable for the feed frequency, so that the articles enter said cavities as they reach the end of the conveyor. As it turns, the rotating element deposits the articles in a vertical position on said exit conveyor means.

Preferably, the machine of present invention includes, on the linear conveyor and at the entry of the positioning station, a mobile retaining device, such as a fluid dynamic cylinder rod, which momentarily retains each article while the rotating element turns in order to carry the previous article and to situate another empty cavity in front of the momentarily retained article.

On certain occasions, depending on the type of production or the characteristics of the article being handled, it is required that the positioning station deposits the articles inside individual support elements, in the form of pucks, which can then be later individually manipulated. Therefore, the machine of present invention includes a delivery device, which sequentially positions these pucks on said exit conveyor means, right in the area where the rotating element deposits by gravity the articles in a vertical position, so that each article is deposited inside one of the pucks, which is then transferred by the exit conveyor means.

Said puck delivery device and said rotating element are synchronically driven, typically by a common motor connected by means of various transmissions, in order to guarantee the correct position of the individual pucks under the rotating element to receive the articles. However, it is important that no individual empty puck leaves the exit conveyor when, for whatever reason, an article has not entered a given cavity of the rotating element. To ensure this, a detection means is included, such as an optical sensor, which detects the presence of an article in the cavity which is in the load position, with the rotating element and the puck delivery device only being operated when the presence of an article in the relevant cavity is detected.

Especially when the articles are light empty containers intended to be fed to a filling station, it is usual, and in some jurisdictions compulsory, to carry out a cleaning operation of the inside of the containers prior to filling. In order to achieve this, the containers enter the cavities with the neck in the forward position and then the rotating element turns in a direction so that said articles pass through a raised area in the inverted vertical position, in other words, with the neck downwards, before being rotated once again and deposited upright on the exit conveyor. The short time during which the containers are upside down is used to carry out the interior cleaning operation. For this reason, each of the cavities has at least one interior cylindrical wall which is coaxial with the spin axis of the rotating element, where the container neck is supported on said cylindrical wall. This wall is provided with at least one aperture that is aligned with the necks. During the rotation of the rotating element, the containers pass upside down through said raised area where the necks are faced through said aperture with a cleaning fluid blower nozzle or a suction nozzle, or both consecutively, the rotation then continuing until containers are deposited upright on the exit conveyor means.

### Brief description of the drawings

This invention will be better understood by means of the following detailed description of some preferred exemplary embodiments with reference to the accompanying drawings, in which:
Fig. 1 is a simplified general perspective view of the automatic linear machine for orientating and aligning articles according to a first embodiment of the present invention;
Fig. 2 is a side view of the linear conveyor in the direction of arrow II in Figs. 1 and 3, showing the arrangement of the pre-orientated articles thereon as they leave the Feeder;
Fig. 3 is a simplified general perspective view of the automatic linear machine for orientating and aligning according to a second embodiment of the present invention;
Fig. 4 is an enlarged detail view of a turning device in a variant for the selection means of the machine in Figs. 1 and 3;
Fig. 5 is a side section of the rotating element of the machine in Figs. I and 3;
Fig. 6 is a diagrammatic elevation view illustrating the operation of the positioning station for the machine in Figs. 1 and 3; and
Fig. 7 is a simplified partial perspective view from an inverted angle, of the machine shown in Figs. 1 and 3, to which a puck positioning device has been added, the articles being placed upright in the pucks on the exit conveyor.

### Detailed description of some preferred exemplary embodiments

The figures make use of the same numeric references for those equivalent parts in the various exemplary embodiments and variants.

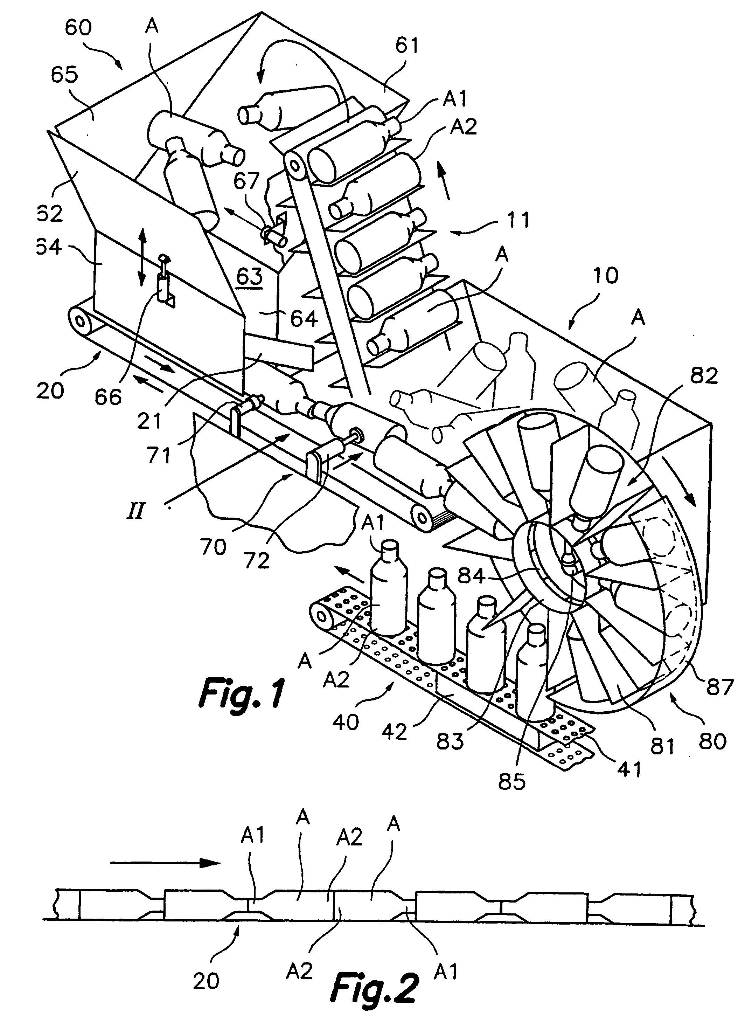

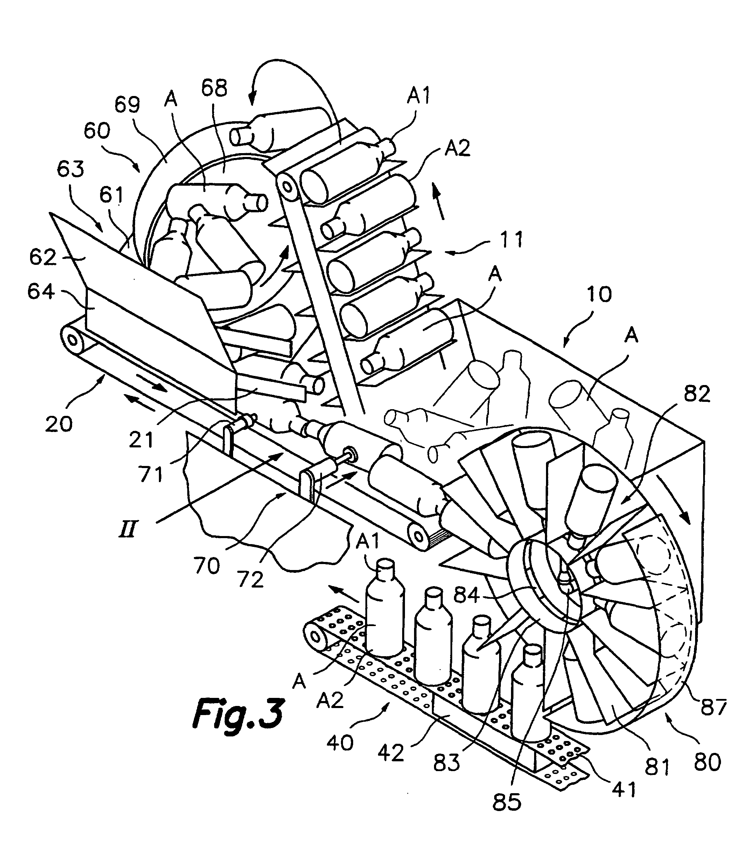

First referring to Figs. 1 and 3, the automatic linear machine for orientating and aligning articles of this invention is intended for articles A of the type having a differentiated geometric configuration A1 at one of the ends, such as bottles with necks.

The machine essentially comprises a tank 10 for such articles A arranged in a bulk scrambled manner, a linear conveyor 20 for articles A coming from tank 10 in a lying arrangement, pre-orientated in a longitudinal direction, with said differentiated geometric configuration A1 already located either at the front or the rear, with respect to the direction of travel of this conveyor 20; a positioning station 80 connected to the conveyor 20 in order to place articles A in a vertical position; and exit conveyor means 40 for articles A orientated in said vertical, aligned position. The machine besides includes a feeder 60 placed between the tank 10 and linear conveyor 20 for feeding articles A from said tank 10 to the linear conveyor 20, depositing them on the conveyor in said pre-orientated position. The exemplary embodiments of Figs. I and 3 differ only in said feeder 60 and associated elements.

The feeder 60 in the exemplary embodiment of fig. 1 comprises at least first and second inclined planes 61, 62 for receiving scrambled articles A from tank 10, where the first and second inclined planes 61, 62 converge on a drop space 63, which is delimited by two parallel vertical planes 64 having adjustable width by conventional means that are not illustrated. Other walls 65 cooperate with said first and second inclined planes 61, 62 in order to delimit a hopper. The gap between said vertical planes 64 is lightly longer than the smallest transversal dimension of articles A (in the case, not shown, of having two different transversal dimensions), so that the articles can only enter by gravity in the drop space turned on said smaller transverse dimension. Drop space 63 is arranged aligned over a portion of said linear conveyor 20, which typically comprises a continuous belt so that the articles, on dropping, make contact with the conveyor and are moved along with a probable tendency to turn in an initial phase until they are in said pre-orientated lying position in the longitudinal direction, with the differentiated geometric configuration A1 located either at the front or rear with respect to the direction of travel of said conveyor 20 and, in the case of having a smaller transversal dimension, supported on one side thereof. Although not shown for a best clarity of the drawing, linear conveyor 20 is fitted with railing means to maintain articles A in such arrangement.

It is probable that an accumulation of articles A occurs at the mouth of said drop space 63 leading to a blockage, for example due a mutual joining up of protuberant parts of articles A. These blockages are difficult to avoid, but the machine of the present invention solves the problem by connecting one or more planes 61, 62, 64 of feeder 60 to a shaker 66, such as a fluid dynamic cylinder controlled by means of detection means 67, preferably comprising an optical sensor, located so that it covers said mouth area of drop space 63. When said sensor means 67 detects an excessive accumulation of articles A in this area, it sends a command via central control means for the shaker 66 to apply a brief shake or vibration to planes 61, 62, 64, which is sufficient to remove the blockage.

Tank 10 is on a lower level with respect to said first and second inclined planes 61, 62 and comprise conventional elevator means 11, which transfer articles A from tank 10 to feeder 60. Tank 10 is also preferably on a lower level with respect to conveyor 20 and adjacent to at least one section thereof at the exit of feeder 60, where deflection means 21 are provided to return those articles A which are in an unwanted position on conveyor 20, such as superimposed, one on top of another article, or upright, among others.

Fig. 3 shows a second exemplary embodiment which only differs from that in Fig. 1 in the feeder 60. Also here the feeder 60 comprises first and second converging inclined planes 61, 62 to receive articles A from tank 10 and lead them to the mouth area of the drop space 63 delimited by two vertical parallel planes 64. However, here the first inclined plane 61 comprises an inclined rotating disc 68 which receives the articles A from tank 10 at its highest level and leads them to the mouth area of the drop space 63 which is adjacent at its lowest level. The first inclined plane 61 may have a lower slope than the first inclined plane 61 of the variant in Fig. 1, which does not have said inclined rotating disc 68. This rotating disc 68 may be completely flat or may have a progressive elevation towards the centre, forming an approximate conical surface, at least at the centre, and preferably its perimeter edge is substantially level with the first inclined plane 61. A fixed side wall 69, delimits a space around the rotating disc 68. Because of the inclination of plane 61 and the effect of the rotating disc 68, a great scrambled accumulation of containers A occurs at the upper mouth area of the drop space 63, which is moved by the rotating disc 68 in a way that guarantees a high proportion of them entering the drop space 63, at the bottom of which here is also located the linear conveyor 20 which leads the articles to the positioning station 80. A series of deflectors 21 return to tank 10 all those articles A which, although they are being moved along the linear conveyor 20, they are not in the lying, pre-orientated longitudinal position, with the differentiated geometric configuration A1 either to the front or rear with respect to the direction of travel of conveyor 20. With this arrangement, it is practically guaranteed that there are no empty spaces between adjacent containers A, which are finally led by conveyor 20 to the positioning station 80.

Fig. 2 shows the arrangement of the articles on conveyor 20 just as they are fed by feeder 60 of both first and second embodiments respectively shown in Figs. 1 and 3. In other words, the articles A travel in a lying, pre-orientated longitudinal position, with the differentiated geometric configuration, e.g. the neck, randomly located to the front or rear with respect to the direction of travel of conveyor 20, as indicated by an arrow.

Because of the special operating principle of positioning station 80, which is described below, said linear conveyor 20 is associated with selector means 70 located before positioning station 80 to remove from the conveyor, or to rotate through 180°, those articles A which are advancing with said differentiated geometric configuration A1 located in an unwanted either front or rear position, so that the articles A are always fed to the positioning station 80 with the differentiated geometric configuration A1 always in the required position with respect to the direction of travel. When articles A are light empty containers and the differentiated geometric configuration is their neck, just as illustrated in the figures, it is desired that said neck is located to the front of the container with respect to the direction of travel of the conveyor 20 so that positioning station 80 can set them in the vertical upright position on their base A2 with neck A1 on top.

Said selector means 70 comprises detector means 71, such as an electronic reader, optical sensors, video camera or similar, to detect the position of differentiated geometric configuration A1 in articles A which advance along conveyor 20. When detector 71 detects an article A with the differentiated geometric configuration A1 in an unwanted position, in the illustrated example it is a container with the neck to the rear with respect to the direction of travel, it will issue a command to an ejection device 72, such as a pusher driven by a fluid dynamic cylinder, to push this detected article A off the conveyor 20, preferably back to the tank 10.

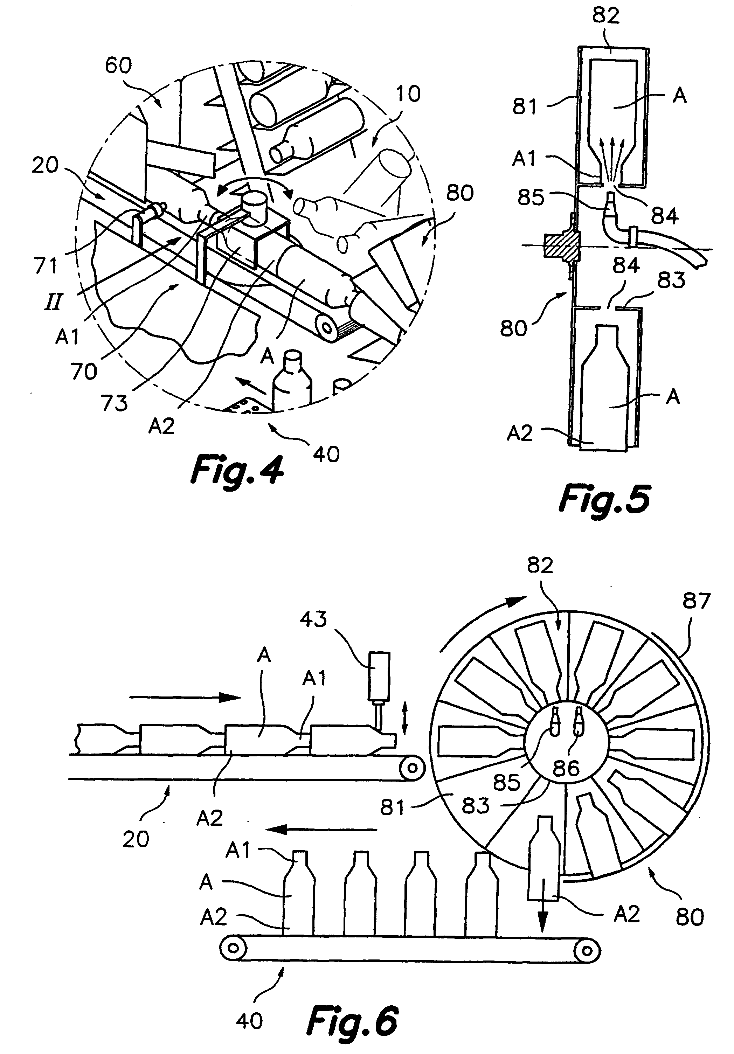

Alternatively, as shown in Fig. 4, instead of ejection device 72, selector means 70 of the machine of the invention may incorporate a turning device 73 to turn said detected article A through 180° on conveyor 20. The turning device 73 is already known and comprises a tubular passage without a base wall through which articles A pass arranged on conveyor 20. In response to a signal from the detector means, a fluid dynamic actuator very quickly rotates this passage through 180° along an axis normal to the conveyor surface, so that article A is able to continue its advance, but now with the required pre-orientation. Preferably, the device will include a detent (not shown), driven by a fluid dynamic cylinder, which momentarily detains the article following the one being turned in order to prevent any interference with turning device 73. In this way, all the articles arrive at the positioning station 80 pre-orientated in the required fashion, which in the illustrated case are bottles A with neck A 1 to the front of the containers, just as can be better seen in Fig. 6.

One very simple embodiment, not shown, for the positioning station 80 comprises means to take the articles A to at least one open space over at least one drop channel in the form of a funnel fitted with an open bottom through which articles A are located in the vertical position over the exit conveyor means 40. This drop channel is similar to those described in relation with prior art rotating positioning machines including drop channels with neck retention means.

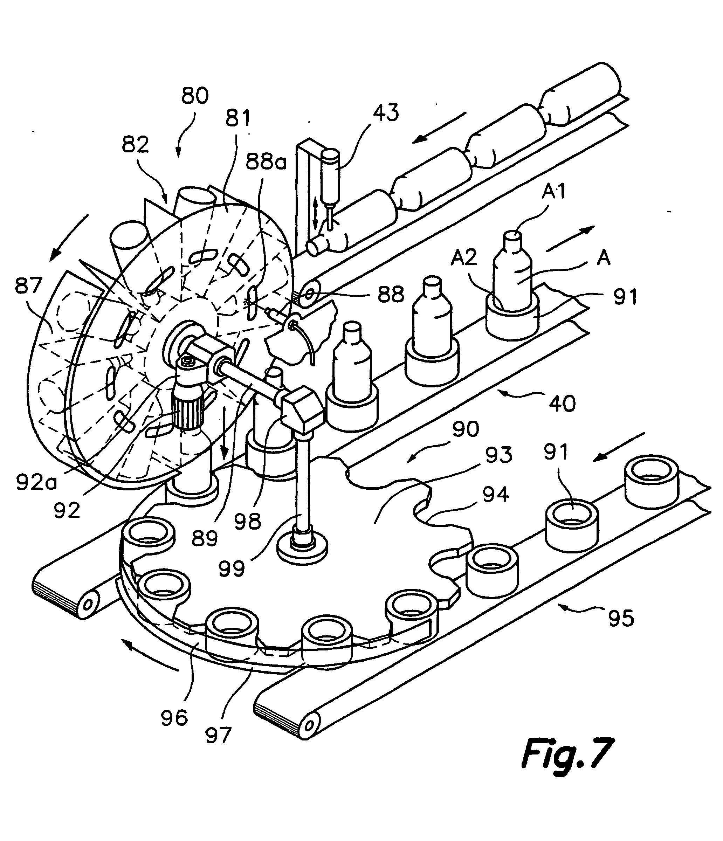

However, in a more complex embodiment, just as shown in Figs. 1, 3 and 5 to 7, the positioning station 80 comprises a rotating element 81 fitted with cavities 82, each of which is suitable to receive an article A with the geometric configuration A1 in the desired position, said rotating element 81 turning at a speed that is adequate for the feed frequency of linear conveyor 20, and which, as it rotates, it deposits articles A in the vertical position on said exit conveyor means 40. In order to prevent that articles A from exiting the cavities 82 on the rotating element 81 during its descent path, this part is fitted with a stationary surrounding wall 87, against which the articles A are supported and slide to an interruption of said wall 87, through which articles A drop upright, supported on their bases A2, onto the exit conveyor means 40, which may be, for example, a perforated conveyor belt through which a depression is applied (as shown in Figs. 1 and 3), or each article A is deposited upright in side one of the pucks 91 located on the exit conveyor means 40 at suitable intervals (as shown in Fig. 7).

Figs. 1 and 3 show the exit conveyor means 40 comprising a perforated continuous belt 41 associated with a vacuum chamber 42 located below the same belt 41, at least in the reception area, in order to apply a suction force to the article A support base, pulling it to the continuous belt 41 in order to assist traction and stabilisation at least in the initial section of the exit path.

Fig. 7 shows a delivery device 90 for sequentially locating one of said pucks 91 for articles on the exit conveyor means 40, just in the area where the rotating element 81 on turning, deposits an article A by gravity in the vertical position, so that each of these articles A is deposited inside one of these pucks 91, which is then led away by exit conveyor means 40 before the delivery device deposits another puck 91 under rotating element 81. Said delivery device 90 comprises a rotating disc 93 fitted with a series of recesses 94 at regular intervals at its perimeter, said disc 93 being located tangentially on one side to a puck conveyor 95 and tangentially on the other side to the exit conveyor means 40. The pucks 91 advance on the conveyor 95 and arrive at the perimeter of disc 93 at a suitable speed, so that each puck 91 is coupled by one of the recesses 94 of the disc 93, which takes it along a curved path, with the aid of a deflector wall 96, over a support plane 97, until it is deposited on the exit conveyor means 40 in said position under the rotating element 81, where it receives the upright article A and continues along its path, together with article A on conveyor 40.

It is evident that this puck 91 delivery device 90 and the rotating element 81 are synchronously driven in order to guarantee the correct puck 91 position where the upright article A is deposited. Typically, this synchronism is achieved just as shown in Fig. 7, by means of drive from common motor 92 connected via gearing 92a to rotating shaft 89 of rotating element 81, where shaft 89 is connected via a kneed retransmission 98 to rotating shaft 93a of disc 93, which thus ensures correct positioning of the pucks 91 under rotating element 81 for receiving articles A.

It is also important that no empty puck 91 leaves the exit conveyor means 40 when, for whatever reason, an article A has not entered a given cavity 82 of the rotating element. To ensure that this possibility does not occur, a detection means is included, such as an optical sensor 88, which detects the presence of an article A in the cavity 82 which is in the filling position, in other words, to detect when an article A has in fact entered cavity 82. In order to facilitate this detection, each cavity 82 has a small window 88a, in a side wall of the rotating element 81, so that these windows 88a are successively placed in front of optical detector 88 when the corresponding cavity 82 is in the position to be filled with an article A. The drive to said rotating element 81 and the puck 91 delivery device 90 is only operated when an article A is detected in the corresponding cavity 82.

Another important feature of the machine of the present invention is the possibility of cleaning articles A during the operation to put them upright, especially when the articles A are empty bottles or containers intended for a filling line with products for human consumption. Rotating element 81 turns in a direction such that articles A pass through an inverted vertical position (see on top of Fig. 5) before being deposited on exit conveyor means 40. This inverted position may be advantageously used for carrying out a brief cleaning operation for the interior of articles A by means of blowing or suction, since the force of gravity will assist in the elimination of solid particles inside the containers. For this reason, cavities 82 have at least one cylindrical wall 83, which is coaxial with the spin axis of rotating element 81 that defines an empty space in the hub of rotating element 81. Neck A1 of containers A is supported on this cylindrical wall 83, at least one slot 84 being provided in said wall 83 aligned with the apertures of necks A1. There is a cleaning fluid blower nozzle 85, or a suction nozzle 86, or both, inside the empty hub of the rotating element 81, arranged consecutively along the path of this slot 84 in the cylindrical wall 83 so that, just as shown in Figs. 5 and 6, the apertures of necks A2 of containers A are facing these nozzles 85, 86 via slot 84. This described cleaning operation can be continuously carried out, without stopping rotating element 81.

One skilled in the art will be able to carry out the machine of the present invention from the above detailed description of some exemplary embodiments thereof, and modifications and variations will occur to him without departing from the scope of the invention, which is defined in the attached claims.

## Claims

1. An automatic linear machine for article positioning and aligning, where these articles (A) are of the type with a differentiated geometric configuration (A1) at one end, such as bottles with necks, in which the machine comprises:
a tank (10) for these articles (A) arranged in a bulk scrambled form;
a linear conveyor (20) for these articles (A) coming from said container in a lying position, pre-orientated in a longitudinal direction, with said differentiated geometric configuration (A1) located either to the front or rear with respect to the direction of travel of conveyor (20);
a positioning station (80) associated with conveyor (20) for positioning the articles (A) in a vertical orientation; and
exit conveyor means (40) for conveying the articles (A) orientated in a vertical, aligned position,
**characterised in that**:
the linear conveyor (20) is associated with selector means (70), which are located before the positioning station (80), in order to either remove from the conveyor those articles (A) arriving with said differentiated geometric configuration (A1) located in an unwanted front or rear position or turn them through 180°, so that the articles (A) are fed to the positioning station (80) with the differentiated geometric configuration (A1) always located in a desired position with respect to the direction of travel; and **in that**
the positioning station (80) comprises a rotating element (81) provided with cavities (82) each suitable for receiving an article (A) in a substantially radial arrangement and with the geometric configuration (A1) in the desired position, the rotating element (81) on turning, depositing the articles (A) by gravity in a vertical position over the exit conveyor means (40).

2. Machine, according to claim 1, **characterised in that** said selector means (70) comprises detector means (71), such as an electronic reader, optical sensors, video camera or similar, to detect the position of the differentiated geometric configuration (A1) in articles (A) which are moving along the conveyor (20) and, on detecting an article (A) with the differentiated geometric configuration (A1) in an unwanted position, issue a command to a rejection device (72), such as a pusher driven by a fluid dynamic cylinder, which pushes this detected article (A) off the conveyor (20).

3. Machine, according to claim 1, **characterised in that** said selector means (70) comprises detector means (71), such as an electronic reader, optical sensors, video camera or similar, to detect the position of the differentiated geometric configuration (A1) in articles (A) which are moving along the conveyor (20) and, on detecting an article (A) with the differentiated geometric configuration (A1) in an unwanted position, issue a command to a turning device (73), which then rotates this detected article (A) through 180° on the conveyor (20).

4. Machine, according to claim 1, **characterised in that** the positioning station comprises means to take the articles (A), which are all advancing with the geometric configuration (A1) in the desired position, to at least one open space over at least one drop channel with an open bottom through which the articles (A) are located in a vertical position over said exit conveyor means (40).

5. Machine, according to claim 1, **characterised in that** in the linear conveyor (20), at the entrance to the positioning station (80), is located a moving retaining device (22), such as a rod of a fluid dynamic cylinder, to momentarily retain each article (A) while the rotating element (81) rotates to carry away the previous article (A) and locate another empty cavity (82) in front of the momentarily retained article (A).

6. Machine, according to claim 1, **characterised in that** it comprises a delivery device (90) for sequentially positioning pucks (91) for articles (A) over said exit conveyor means (40) in the area where the rotating element (81) on turning, deposits articles (A) by gravity in a vertical position, so that each of said articles (A) is deposited inside one of said pucks (91), which is then moved on by the exit conveyor means (40).

7. Machine, according to claim 6, **characterised in that** said delivery device (90) and said rotating element (81) are synchronically driven by motor means (92), detector means (88), such as an optical sensor, being provided to detect the presence of an article (A) in the cavity (82) to be filled, said synchronic drive being carried out only when the presence of an article (A) in cavity (82) to be filled is detected.

8. Machine, according to claim 1, **characterised in that** the rotating element (81) turns in such a direction that articles (A) pass through an inverted vertical position before being deposited on the exit conveyor means (40).

9. Machine, according to claim 8, **characterised in that** said cavities (82) have at least one cylindrical wall (83) coaxial to the spin axis of the rotating element (81), and a part of the article (A) having an aperture communicating with a hollow cavity thereof is supported on said cylindrical wall (83) at least over a stretch of the rotating path of the rotating element (81) where articles (A) are in said inverted vertical position, at least one slot (84) being provided in said cylindrical wall (83) aligned with said apertures of the articles, and during said stretch of the rotating path where articles (A) are in said inverted vertical position, said apertures of the articles are faced to a cleaning liquid blower nozzle (85), or a suction nozzle (86), or both consecutively, through said slot (84).

10. Machine, according to claim 1, **characterised in that** it comprises a feeder (60) to feed articles (A) from said tank (10) to said linear conveyor (20) in said pre-orientated position, said feeder (60) comprising at least first and second inclined planes (61, 62) to receive articles (A) in a scrambled manner, coming from tank (10), said first and second inclined planes (61, 62) converging in a drop space (63) delimited by two vertical parallel planes (64) separated by a distance that is slightly longer than the smallest transverse dimension of articles (A), where the drop space (63) is arranged aligned over a portion of the linear conveyor (20).

11. Machine, according to claim 10, **characterised in that** said feeder (60) further comprises other walls (65) which, together with the first and second inclined planes (61, 62) delimit a hopper.

12. Machine, according to claim 11, **characterised in that** one or more of said planes (61, 62, 64) of feeder (60) are connected to a shaker (66), such as a fluid dynamic cylinder, controlled by a detection means (67), such as an optical sensor, to detect accumulations of articles (A) at the mouth of this drop space (63).

13. Machine, according to claim 10, **characterised in that** said first inclined plane (61) comprises an inclined rotating disc (68) which receives articles (A) from the tank (10) at its highest level and leads them to said drop space (63), which is adjacent at its lowest level, and a fixed side wall (69), arranged around part of the edge of the rotating disc (68) in order to delimit a space over it.

14. Machine, according to claim 10, **characterised in that** said tank (10) is at a lower level with respect to said first and second inclined planes (61, 62) and comprises elevator means (11) for transferring articles (A) from the tank (10) to said feeder (60).

15. Machine, according to claim 14, **characterised in that** said tank (10) is at a lower level with respect to conveyor (20) and adjacent to at least one section of the same at the exit of feeder (60), in which section deflector means (21) are arranged to return to the tank (10) those articles (A) that are not on the conveyor (20) in a lying position, pre-orientated in a longitudinal direction, with said differentiated geometric configuration (A1 ) located at either the front or rear with respect to the direction of travel.

## Patentansprüche

1. Automatische Linearmaschine zur Positionierung und Ausrichtung von Gegenständen, wobei diese Gegenstände (A) an einem Ende eine differenzierte geometrische Gestalt (A1), wie z.B. Flaschen mit Flaschenhals, aufweisen, wobei die Maschine folgendes umfasst:
einen Behälter (10) für diese Gegenstände (A), die in ungeordneter Form vorliegen;
einen Linearförderer (20) für die, aus dem Behälter liegend kommenden, in Längsrichtung vororientierten Gegenstände (A), wobei die differenzierte geometrische Gestalt (A1) bezüglich der Bewegungsrichtung der Transportvorrichtung (20) entweder vorne oder hinten liegt,
eine mit dem Förderer (20) verbundene Positionierungsstation (80) zur Positionierung der Gegenstände (A) in vertikaler Orientierung; sowie
Abtransportmittel (40) zum Transport der in vertikaler, ausgerichteter Lage orientierten Gegenstände (A),
**dadurch gekennzeichnet, dass**:
der Linearförderer (20) mit Wahlmitteln (70) verbunden ist, die sich vor der Positionierungsstation (80) befinden, um jene ankommenden Gegenstände (A), deren differenzierte geometrische Gestalt (A1) in einer unerwünschten Lage vorne oder hinten vorliegt, entweder zu entfernen oder sie um 180° zu drehen, damit die Gegenstände (A) mit der differenzierten geometrischen Gestalt (A1) bezüglich der Bewegungsrichtung stets in der gewünschten Lage der Positionierungsstation (80) zugeführt werden; und dass
die Positionierungsstation (80) ein Drehelement (81) aufweist, das mit Hohlräumen (82) versehen ist, die jeweils zur Aufnahme eines Gegenstandes (A) in einer im wesentlichen radialen Anordnung und mit der geometrischen Gestalt (A1) in der gewünschten Lage geeignet sind, wobei das Drehelement (81) beim Drehen die Gegenstände (A) durch Schwerkraft in vertikaler Lage über dem Abtransportmittel (40) abstellt.

2. Maschine nach Anspruch 1, **dadurch gekennzeichnet, dass** das Wahlmittel (70) Erfassungsmittel (71), wie z.B. einen elektronischen Leser, optische Sensoren, Videokamera o.ä., aufweist zur Erfassung der Lage der differenzierten geometrischen Gestalt (A1) der sich entlang des Förderers (20) bewegenden Gegenstände (A) und bei Feststellung eines Gegenstandes (A) mit der differenzierten geometrischen Gestalt (A1) in einer unerwünschten Lage zur Ausgabe eines Befehls an eine Abweisungsvorrichtung (72), wie z.B. einen von einem flüssigkeitsdynamischen Zylinder angetriebenen Schieber, der den erfassten Gegenstand (A) von der Transportvorrichtung (20) herunterschiebt.

3. Maschine nach Anspruch 1, **dadurch gekennzeichnet, dass** das Wahlmittel (70) Erfassungsmittel (71), wie z.B. einen elektronischen Leser, optische Sensoren, Videokamera o.a., aufweist zur Erfassung der Lage der differenzierten geometrischen Gestalt (A1) der sich entlang des Förderers (20) bewegenden Gegenstände (A) und bei Feststellung eines Gegenstandes (A) mit der differenzierten geometrischen Gestalt (A1) in einer unerwünschten Lage zur Ausgabe eines Befehls an eine Drehvorrichtung (73), die den erfassten Gegenstand (A) dann auf der Transportvorrichtung (20) um 180° dreht.

4. Maschine nach Anspruch 1, **dadurch gekennzeichnet, dass** die Positionierungsstation Mittel aufweist, die die Gegenstände (A), die sich alle mit der differenzierten geometrischen Gestalt (A1) in der gewünschten Lage vorwärtsbewegen, zu mindestens einer freien Fläche über mindestens einem Fallkanal mit offenem Boden transportieren, durch den die Gegenstände (A) in vertikaler Stellung über dem Abtransportmittel (40) angeordnet werden.

5. Maschine nach Anspruch 1, **dadurch gekennzeichnet, dass** im Linearförderer (20) am Eingang zur Positionierungsstation (80) eine bewegliche Rückhaltevorrichtung (22), wie z.B. eine Stange eines flüssigkeitsdynamischen Zylinders vorhanden ist, die den jeweiligen Gegenstand (A) vorübergehend zurückhält, während sich das Drehelement (81) dreht, um den vorhergehenden Gegenstand (A) wegzutransportieren und einen weiteren leeren Hohlraum (82) vor dem vorübergehend zurückgehaltenen Gegenstand (A) zu positionieren.

6. Maschine nach Anspruch 1, **dadurch gekennzeichnet, dass** sie eine Zufuhrvorrichtung (90) zur aufeinanderfolgenden Positionierung von Aufnahmescheiben (91) für die Gegenstände (A) über dem Abtransportmittel (40) in dem Bereich, in dem das Drehelement (81) beim Drehen die Gegenstände (A) durch die Schwerkraft in vertikaler Richtung absetzt, wobei die Gegenstände jeweils in einem der Aufnahmescheiben (91) abgestellt werden, die dann durch das Abtransportmittel (40) weiterbewegt wird.

7. Maschine nach Anspruch 6, **dadurch gekennzeichnet, dass** die Zufuhrvorrichtung (90) und das Drehelement (81) durch Antriebsmittel (92) synchron angetrieben werden, wobei Erfassungsmittel (88), wie z.B. ein optischer Sensor, vorgesehen sind, die das Vorliegen eines Gegenstandes (A) in dem zu füllenden Hohlraum (82) erfassen, wobei der synchrone Antrieb nur bei Erfassung des Vorliegens eines Gegenstandes (A) im zu füllenden Hohlraum (82) erfolgt.

8. Maschine nach Anspruch 1, **dadurch gekennzeichnet, dass** das Drehelement (81) sich in solch einer Richtung dreht, dass die Gegenstände (A) durch eine invertierte vertikale Lage passieren, bevor sie auf der Abtransportvorrichtung (40) abgelegt werden.

9. Maschine nach Anspruch 8, **dadurch gekennzeichnet, dass** die Hohlräume (82) mindestens eine zylinderförmige Wand (83) aufweisen, die koaxial zur Drehachse des Drehelements (81) verläuft, und ein Teil des Gegenstandes (A) mit einer Öffnung, die mit einer deren Hohlräume kommuniziert, auf der zylinderförmigen Wand (83) zumindest über einen Teil der Drehstrecke des Drehelements (81) aufliegt, auf der die Gegenstände (A) sich in invertierter vertikaler Lage befinden, wobei in der zylinderförmigen Wand (83) zumindest ein Schlitz (84) vorgesehen ist, der zu den Öffnungen der Gegenstände (A) ausgerichtet ist, und wobei die Öffnungen der Gegenstände auf dem Teil der Drehstrecke, auf der sie sich in invertierter vertikaler Lage befinden, auf eine Blasdüse (85) bzw. eine Absaugdüse (86) für Reinigungsmittel oder beiden hintereinander durch diesen Schlitz (84) hindurch gerichtet sind.

10. Maschine nach Anspruch 1, **dadurch gekennzeichnet, dass** sie eine Beschickungsvorrichtung (60) zur Zufuhr von Gegenständen (A) von dem Behälter (10) zu dem Linearförderer (20) in vororientierter Lage aufweist, wobei die Beschickungsvorrichtung (60) zumindest eine erste und eine zweite Neigungsebene (61, 62) zur Aufnahme von durcheinander angeordneten, aus dem Behälter (10) kommenden Gegenständen (A) aufweist, wobei die erste und zweite Neigungsebene (61, 62) in einer Fallfläche (63) zusammenlaufen, die durch zwei vertikale parallele Ebenen (64) begrenzt ist, die durch einen Abstand voneinander getrennt sind, der nur etwas länger ist als das kleinste Quermaß der Gegenstände (A), wobei die Fallfläche (63) über einem Teil des Linearförderers (20) ausgerichtet angeordnet ist.

11. Maschine nach Anspruch 10, **dadurch gekennzeichnet, dass** die Beschickungsvorrichtung (60) weiterhin weitere Wände (65) aufweist, die zusammen mit der ersten und zweiten Neigungsebene (61, 62) einen Trichter begrenzen.

12. Maschine nach Anspruch 11, **dadurch gekennzeichnet, dass** eine oder mehrere der Ebenen (61, 62, 64) der Beschickungsvorrichtung (60) mit einer Schüttelvorrichtung (66), wie z.B. einem flüssigkeitsdynamischen Zylinder, verbunden sind, der von einem Erfassungsmittel (67), wie z.B. einem optischen Sensor, gesteuert wird, zur Erfassung von angesammelten Gegenständen (A) an der Öffnung der Fallfläche (63).

13. Maschine nach Anspruch 10, **dadurch gekennzeichnet, dass** die erste Neigungsebene (61) eine geneigte Drehscheibe (68), die aus dem Behälter (10) bei dessen höchstem Füllstand Gegenstände (A) aufnimmt und diese an die Fallfläche (63) weiterleitet, die dessen niedrigstem Füllstand benachbart ist, und eine feste Seitenwand (69) aufweist, die um einen Teil der Kante der Drehscheibe (68) herum angeordnet ist und dadurch eine darüber liegende Fläche begrenzt.

14. Maschine nach Anspruch 10, **dadurch gekennzeichnet, dass** der Behälter (10) niedriger liegt als die erste und zweite Neigungsebene (61, 62) und Hebemittel (11) zum Transport von Gegenständen (A) vom Behälter (10) zur Beschickungsvorrichtung (60) aufweist.

15. Maschine nach Anspruch 14, **dadurch gekennzeichnet, dass** der Behälter (10) niedriger liegt als der Förderer (20) und zumindest einem Abschnitt desselben am Ausgang der Beschickungsvorrichtung (60) benachbart ist, wobei in dem Abschnitt Ablenkmittel (21,) angeordnet sind, die jene Gegenstände (A), die auf d em Förderer (20) nicht in liegender, in Längsrichtung vororientierter Stellung, mit der differenzierten geometrischen Gestalt (A1) entweder vorne oder hinten bezüglich der Bewegungsrichtung vorliegen, an den Behälter (10) zurückleitet.

## Revendications

1. Une machine linéaire automatique pour redresser et aligner des articles (A) dans laquelle ces articles sont du genre ayant une configuration géométrique différente (A1) à une extrémité, tels que des bouteilles ayant des goulots, ces machines comprenant:
- un compartiment (10) pour ces articles (A) qui s'y trouvent pêle-mêle;
- un transporteur linéaire (20) pour ces articles (A), provenant de ce compartiment, couchés préalablement orientés dans le sens de la longueur, cette configuration géométrique différente (A1) étant située soit à l'avant soit à l'arrière par rapport à la direction de déplacement du transporteur (20);
- un poste (80) de redressement relié au transporteur (20) pour redresser les articles à l'orientation verticale; et
- des moyens de sortie du transporteur (40) pour transporter les articles (A) orientés en la position verticale, alignés;
**caractérisé en ce que**:
le transporteur linéaire (20) est relié aux moyens de triage (70) qui sont situés en amont du poste de redressement (80), afin soit de retirer du transporteur ces articles (A) arrivant avec cette configuration géométrique différente (A1) situés à une position avant ou arrière indésirable soit les retourner de 180 degrés de sorte que les articles (A) seront alimentés au poste de redressement (80) avec leur configuration géométrique différente (A1) toujours située à une position souhaitée par rapport à la direction de déplacement; et **en ce que**
le poste de redressement (80) comprend un élément tournant (81) pourvu d'évidements (82) chacun d'eux approprié pour recevoir un article (A) en un agencement sensiblement radial et les configurations géométriques (A1) étant en la position souhaitée, l'élément tournant (81), lorsqu'il tourne dépose les articles (A) par gravité en position verticale sur les moyens transporteurs de sortie (40).

2. Machine conformément à la revendication 1, **caractérisée en ce que** ces moyens de triage (70) comprennent des moyens de détection (71) tels qu'un lecteur électronique, des capteurs optiques, une caméra de vidéo ou assimilé pour détecter la position de la configuration géométrique différente (A1) des articles (A) se déplaçant le long du transporteur (20) et, qui lorsqu'ils détectent un article (A) à configuration géométrique différente (A1) se trouvant en une position indésirable, commandent un dispositif de refoulement (72) tel qu'un poussoir commandé par un cylindre hydrodynamique qui repousse cet article détecté (A) hors du transporteur (20).

3. Machine conformément à la revendication 1, **caractérisée en ce que** ces moyens de triage (70) comprennent des moyens de détection (71) tels qu'un lecteur électronique, des capteurs optiques, une caméra de vidéo ou assimilé pour détecter la position de la configuration géométrique différente (A1) dans les articles (A) se déplaçant le long du transporteur (20) et, qui lorsqu'ils détectent un article (A) à configuration géométrique différente (A1) se trouvant en une position indésirable, commandent un dispositif tournant (73) qui alors fait tourner cet article détecté (A) 180 degrés sur le transporteur (20).

4. Machine conformément à la revendication 1, **caractérisée en ce que** ce poste de redressement comprend des moyens pour emmener les articles (A) qui sont tous en train d'avancer avec la configuration géométrique (A1) à la position souhaitée, à au moins un espace ouvert au-dessus d'au moins un canal de chute ayant un fond ouvert à travers lequel sont situés les articles en position verticale au-dessus de ces moyens de transport de sortie (40).

5. Machine conformément à la revendication 1, **caractérisée en ce que** dans le transporteur linéaire (20) à l'entrée au poste de redressement (80) il se trouve un dispositif de rétention mobile (22) tel que la tige d'un cylindre hydrodynamique, pour retenir temporairement chaque article (A) tandis que l'élément tournant (81) tourne pour emmener l'article précédent (A) et situer un autre évidement vide (82) en face de l'article temporairement retenu (A).

6. Machine, conformément à la revendication 1, **caractérisée en ce qu'**elle comporte un dispositif de décharge (90) pour redresser séquentiellement des bacs (91) pour les articles (A) au-dessus de ces moyens de transport de sortie (40) dans la zone où l'élément tournant (81), lorsqu'il tourne, dépose les articles (A) par gravité en position verticale, de sorte que chacun de ces articles (A) est déposé à l'intérieur d'un de ces bacs (91), qui est alors déplacé par les moyens de transport de sortie (40).

7. Machine, conformément à la revendication 6, **caractérisée en ce que** ce dispositif de décharge (90) et cet élément tournant (81) sont commandés synchronisés par un moyen moteur (92), des moyens de détection (88), tel qu'un capteur optique, qui est prévu pour détecter la présence d'un article (A) dans l'évidement (82) à remplir, cette commande synchronisée étant réalisée seulement lorsque la présence d'un article (A) dans l'évidemment (82) à remplir est détectée.

8. Machine, conformément à la revendication 1, **caractérisée en ce que** l'élément tournant (81) tourne dans une direction telle que les articles (A) passent par une position inversée verticale avant d'être déposés sur les moyens de transport de sortie (40).

9. Machine, conformément à la revendication 8, **caractérisée en ce que** ces évidements (82) ont au moins une paroi cylindrique (83) coaxiale à l'axe de rotation de l'élément tournant (81) et une partie de l'article (A) ayant une ouverture qui communique avec l'évidement creux de celui-ci est appuyée sur cette paroi cylindrique (83) au moins au-dessus d'une partie de la trajectoire de rotation de l'élément tournant (81) où ces articles (A) se trouvent dans cette position verticale inversée au moins une rainure (84) étant prévue sur cette paroi cylindrique (83) alignée avec ces ouvertures des articles et pendant cette partie de la trajectoire de rotation quand les articles (A) sont dans cette position verticale inversée, ces ouvertures des articles sont en face de buses (85) qui les arrosent avec un liquide de nettoyage ou bien une buse d'aspiration (86) ou les deux, consécutivement, à travers cette rainure (84).

10. Machine, conformément à la revendication 1, **caractérisée en ce qu'**elle comporte un alimentateur (60) pour alimenter des articles (A) de ce compartiment (10) à ce transporteur linéaire (20) dans cette position préalablement orientée, cet alimentateur (60) comportant au moins des premier et deuxième plans inclinés (61, 62) pour recevoir des articles (A) pêle-mêle provenant du compartiment (10), ces premier et deuxième plans inclinés (61, 62) convergeant dans un espace de chute (63) délimité par deux plans parallèles verticaux (64) séparés par une distance qui est légèrement plus longue que la plus petite dimension transversale des articles (A) dans laquelle l'espace de chute (63) est agencé aligné au-dessus d'une portion du transporteur linéaire (20).

11. Machine, conformément à la revendication 10, caractérisée en cet alimentateur (60) comporte de plus d'autres parois (65) qui, avec les premier et deuxième plans inclinés (61, 63) délimite une trémie.

12. Machine, conformément à la revendication 11, **caractérisée en ce que** un ou plusieurs de ces plans (61, 62, 64) de l'alimentateur (60) sont reliés à un secoueur (66), tel qu'un cylindre hydrodynamique, contrôlé par un moyen de détection (67) tel qu'un capteur optique pour détecter les accumulations d'articles (A) à l'embouchure de cet espace de chute (63).

13. Machine, conformément à la revendication 10, **caractérisée en ce que** ce premier plan incliné (61) comporte un disque tournant incliné (68) qui reçoit des articles (A) du compartiment (10) à son niveau le plus élevé et les conduit à cet espace de chute (63) qui est adjacent à son niveau le plus bas et une paroi latérale fixe (69), agencée autour de la partie du bord du disque tournant (68) afin de délimiter un espace au-dessus de celui-ci.

14. Machine, conformément à la revendication 10, **caractérisée en ce que** ce compartiment (10) est à un niveau plus bas par rapport à ces premier et deuxième plans inclinés (61, 62) et comprend des moyens éleveurs (11 ) pour transférer des articles (A) du compartiment (10) à cet alimentateur (60).

15. Machine, conformément à la revendication 14, **caractérisée en ce que** ce compartiment (10) est à un niveau plus bas par rapport au transporteur (20) et adjacent à au moins une section de celui-ci à la sortie de l'alimentateur (60) dans lequel sont agencés les moyens de déflexion (21) pour renvoyer au compartiment (10) les articles (A) qui ne se trouvent pas couchés sur le transporteur (20) préalablement orientés en direction longitudinale, avec ces configurations géométriques différentes (A11 ) situées soit à la partie avant soit à l'arrière, par rapport à la direction de déplacement.
